# EUROPÄISCHE PATENTANMELDUNG

(11) **EP 3 001 220 A1**
(43) Veröffentlichungstag der Anmeldung: **30.03.2016**
(21) Anmeldenummer: 14186413.2
(22) Anmeldetag: 25.09.2014
(51) Int. Cl.: G01S 13/00

(54) **Radaranordnung**

(71) Anmelder: Airbus Defence and Space GmbH, 85521 Ottobrunn (DE)
(72) Erfinder: Prechtel, Ulrich, 81739 München (DE); Meusling, Dr.-Ing. Askold, 83607 Holzkirchen (DE)
(74) Vertreter: Maiwald Patentanwalts GmbH

(57) **Zusammenfassung**

Es ist eine Radaranordnung (10) angegeben. Die Radaranordnung weist eine Sendevorrichtung (100) mit einer ersten Sendeeinheit (110A), eine erste Empfangsvorrichtung (200B) mit einer ersten Empfangseinheit (210A) und eine Steuervorrichtung (300) auf. Die erste Sendeeinheit ist ausgeführt, Radarsignale (112) auszusenden. Die erste Empfangseinheit ist ausgeführt ist, die Radarsignale der ersten Sendeeinheit, welche von einem zu detektierenden Objekt reflektiert werden, zu empfangen. Die Steuervorrichtung (300) ist ausgeführt, die Sendevorrichtung (100) so anzusteuern, dass die Sendevorrichtung eine Bewegung ausführt um ihre Position anzupassen, so dass die von der ersten Sendeeinheit ausgesandten und von dem zu detektierenden Objekt reflektierten Radarsignale die erste Empfangseinheit der ersten Empfangsvorrichtung erreichen.

## Beschreibung

### Gebiet der Erfindung

Die Erfindung betrifft eine Radaranordnung zum funkbasierten Orten von Objekten und zum Abbilden eines Terrains oder eines Umfelds der Radaranordnung.

### Hintergrund der Erfindung

Bekannte Radaranordnungen weisen eine Sendeeinheit für elektromagnetische Wellen auf, welche von einem Objekt reflektiert werden, sowie eine Empfangseinheit zum Empfangen der reflektierten elektromagnetischen Wellen. Bei einer herkömmlichen Radaranordnung sind die Sendeeinheit und die Empfangseinheit gemeinsam in einem Gehäuse oder einer Vorrichtung angeordnet.

Sogenannte SAR-Radarsysteme (Synthetic Aperture Radar, SAR) weisen eine mobile Plattform auf, auf der komplette Radarsysteme mit Sendeeinheit und Empfangseinheit angeordnet sind. Die mobile Plattform ist in der Regel ein Luftfahrzeug, dessen Bewegung genutzt wird, um eine Apertur aufzuspannen, die sogenannte synthetische Apertur. Die hiermit erzeugten Abbildungen können von anderen Einheiten verwendet werden, um beispielsweise auf diese Abbildungen der mobilen Plattform zuzugreifen. Jedoch kann es eine Herausforderung darstellen, zu einem angefragten Zeitpunkt Informationen bzw. Bilddaten zu einem angefragten Gebiet zur Verfügung zu haben und diese Informationen bzw. Bilddaten von der mobilen Plattform an die anfragenden Einheiten zu übertragen bzw. zu verteilen.

Weiterhin sind sogenannten Passiv-Radarsysteme bekannt, bei denen vorhandene stationäre Transmitter, beispielsweise Rundfunksender, als Signalquelle, also als Sendeeinheit, genutzt werden. Ein Nachteil solcher Systeme kann die Abhängigkeit von dem Vorhandensein und der Platzierung der nutzbaren Signalemitter sein, sowie ggf. der fehlende Einfluss auf die Signalerzeugung (Frequenzbereich, Bandbreite, Modulationsverfahren).

Passiv-Radarsysteme können auch Satelliten, z.B. Kommunikationssatelliten, als Signalquelle bzw. Sendeeinheit nutzen. In dieser Anordnung kann es jedoch zu zeitlichen Abdeckungsproblemen kommen, d.h. dass es von der Position und Ausrichtung der Satelliten abhängt, welchen Bereich der Erdoberfläche sie abdecken, d.h. in welche Richtung sie elektromagnetische Wellen emittieren.

### Zusammenfassung der Erfindung

Es kann als Aufgabe der vorliegenden Erfindung angesehen werden, eine Radaranordnung anzugeben, welche sich durch eine örtlich variable Verwendung auszeichnet.

Diese Aufgabe wird gelöst durch den Gegenstand mit den Merkmalen des unabhängigen Anspruchs. Weiterbildungen der Erfindung ergeben sich aus den abhängigen Ansprüchen und aus der folgenden Beschreibung.

Gemäß einem Aspekt der Erfindung ist eine Radaranordnung angegeben. Die Radaranordnung weist eine Sendevorrichtung mit einer ersten Sendeeinheit, eine erste

Empfangsvorrichtung mit einer ersten Empfangseinheit sowie eine Steuervorrichtung auf. Die erste Sendeeinheit ist ausgeführt, Radarsignale auszusenden, also als Sender von elektromagnetischen Wellen zu fungieren. Die erste Empfangseinheit ist ausgeführt, die Radarsignale der ersten Sendeeinheit zu empfangen, insbesondere diejenigen Radarsignale, welche von einem zu detektierenden Objekt reflektiert wurden. Die Steuervorrichtung ist ausgeführt, die Sendevorrichtung so anzusteuern, dass die Sendevorrichtung eine Bewegung ausführt um ihre Position anzupassen, so dass die von der ersten Sendeeinheit ausgesandten und von einem Objekt reflektierten Radarsignale die erste Empfangseinheit der ersten Empfangsvorrichtung erreichen.

Die Radaranordnung kann damit insbesondere als passive Radaranordnung betrachtet werden, bei der die Empfangsvorrichtung als reines passives System ausgeführt ist und keine elektromagnetischen Wellen (Radarsignale) emittiert. Die Empfangsvorrichtungen können an Bord eines Landfahrzeugs angeordnet sein, so dass das Landfahrzeug in die Lage versetzt wird, aktuelle Bilddaten der Umgebung basierend auf den empfangenen Radarsignalen zu generieren.

Indem die Sendevorrichtung mit der ersten Sendeeinheit eine Bewegung ausführt, welche von der Steuervorrichtung vorgegeben wird, kann die Position der Sendevorrichtung insbesondere so beeinflusst werden, dass ein Einsatzgebiet (eine Fläche oder ein Gebiet, beispielsweise auf der Erdoberfläche, in dessen Richtung Radarsignale ausgesandt werden sollen, so dass in diesem Gebiet Objekte detektiert werden können). Damit wird ermöglicht, dass die Empfangsvorrichtungen an beliebigen Orten genutzt werden können und diese nicht von dem Vorhandensein stationärer Sender abhängig sind, da die Sendevorrichtung in die benötigte Position gebracht werden kann.

Die Radaranordnung kann insbesondere in Verbindung mit Landfahrzeugen genutzt werden, d.h. dass sich zumindest die Empfangsvorrichtung auf einem Landfahrzeug befindet, welches auf aktuelle Lagedaten und aktuelle Abbildungen seiner Umgebung unter allen Zeit- und Witterungsbedingungen angewiesen ist. Fahrzeugeigene Radarsysteme mit Sender und Empfänger können in ihrer Apertur begrenzt sein und zudem den Nachteil haben, dass die vom Sender generierten Radarsignale zur Ortung des Fahrzeugs genutzt werden können, was unter Umständen unerwünscht sein kann. SAR-Bilder eines Gebiets können ebenfalls nicht zu jedem beliebigen Zeitpunkt aktuell zur Verfügung stehen, bzw. wenn sie zur Verfügung stehen, erfordern sie eine Übertragungsstrecke zu einen anfragenden Fahrzeug. Die Radaranordnung wie oben und im Folgenden beschrieben überwindet diese Nachteile, indem die Empfangsvorrichtung als passive Komponente ausgeführt ist und die Sendevorrichtung an den Ort bewegt werden kann, an welchem sie gerade erforderlich ist. Die Fahrzeuge sind nicht auf das Vorhandensein stationärer Signalquellen angewiesen, noch auf das Vorhandensein eines wie benötigt ausgerichteten Satelliten.

Die Radaranordnung ermöglicht es, dass Umgebungsabbildungen da generiert werden, wo sie aktuell benötigt werden, so dass beispielsweise Gefahrensituationen zeitnah erkannt werden können, indem auf aktuelles Bildmaterial zugegriffen werden kann. Daneben sind passive Empfangsvorrichtungen kostengünstiger realisierbar als z.B. mehrere Landfahrzeuge mit einem kompletten Radarsystem (Sender und Empfänger) auszustatten. Die Empfangsvorrichtungen selbst senden keine Radarsignale aus und können demnach in einem solchen Frequenzspektrum nicht erkannt bzw. aufgeklärt werden. Weiterhin können breitbandige Datenübertragungsstrecken zu den Fahrzeugen eingespart werden, über welche SAR-Bilddaten übertragen werden müssten. Die mobile bzw. bewegbare Sendevorrichtung ermöglicht eine kontinuierliche Ausleuchtung eines auch wechselnden Einsatzgebietes mit Radarsignalen.

Gemäß einer Ausführungsform sind die Sendevorrichtung und die Empfangsvorrichtung räumlich voneinander getrennt. Das bedeutet beispielsweise, dass die Sendevorrichtung und die Empfangsvorrichtung auf unterschiedlichen Plattformen angeordnet sind und aus Sicht eines zu detektierenden Objekts ein Winkel von mindestens 5°, insbesondere mindestens 10°, weiter insbesondere von mindestens 15° zwischen der Sendevorrichtung und der Empfangsvorrichtung liegt, wobei das zu detektierende Objekt eine Entfernung von bis zu mehreren Kilometern sowohl von der Empfangsvorrichtung als auch von der Sendevorrichtung hat. Die erste Sendeeinheit und die erste Empfangseinheit sind voneinander beabstandet bzw. sind auf unterschiedlichen Plattformen angeordnet. Beispielsweise ist die erste Sendeeinheit auf einem ersten mobilen Fahrzeug angeordnet und die erste Empfangseinheit auf einem zweiten mobilen Fahrzeug, insbesondere auf einem Landfahrzeug.

Gemäß einer weiteren Ausführungsform weist die Radaranordnung eine zweite Empfangsvorrichtung mit einer ersten Empfangseinheit auf, wobei die Steuervorrichtung ausgeführt ist, die Sendevorrichtung so anzusteuern, dass diese sich so bewegt dass von der ersten Sendeeinheit ausgesandten Radarsignale die zweite Empfangseinheit erreichen.

Die Radaranordnung kann weiterhin eine dritte bzw. eine beliebige Mehrzahl von Empfangsvorrichtungen aufweisen, von denen jeweils eine an ein Landfahrzeug gekoppelt ist. Die Sendevorrichtung kann so ausgeführt sein, dass sie so bewegt wird, dass sie ein Einsatzgebiets eines oder mehrerer Empfangsvorrichtungen mit Radarsignalen ausleuchtet. Damit ist die Sendevorrichtung für eine Vielzahl von Empfangsvorrichtungen flexibel und ortsveränderlich einsetzbar.

Gemäß einer weiteren Ausführungsform ist die Steuervorrichtung an der ersten Empfangsvorrichtung angeordnet.

Dies bedeutet, dass die Steuervorrichtung und die erste Empfangsvorrichtung sich beispielsweise auf demselben Landfahrzeug befinden. Damit kann von diesem Fahrzeug aus die Position der Sendevorrichtung bestimmt werden. Dieses Landfahrzeug ist damit in der Lage, die Sendevorrichtung an eine Position zu bringen, um eine Umgebung des Landfahrzeugs oder ein gewünschtes Gebiet mit Radarsignalen auszuleuchten. Dies ermöglicht es einer Landfahrzeugbesatzung, flexibel auf die jeweiligen Bedürfnisse bezüglich der Erstellung von Abbildungen zu reagieren.

Gemäß einer weiteren Ausführungsform ist die Steuervorrichtung räumlich getrennt von der ersten Empfangsvorrichtung angeordnet.

Die Steuervorrichtung kann beispielsweise in einer Steuerzentrale angeordnet sein und von einem Bediener bedient werden. Dabei kann eine Besatzung eines mobilen Landfahrzeugs eine Anforderung an die Steuerzentrale übermitteln und so ein mit Radarsignalen auszuleuchtendes Gebiet angeben. Der Bediener der Steuervorrichtung kann sodann bei Verfügbarkeit die Sendevorrichtung in das gewünschte Gebiet bewegen.

Gemäß einer weiteren Ausführungsform ist die Sendevorrichtung an einem Luftfahrzeug angeordnet.

Dies ermöglicht eine schnelle Bewegung der Sendevorrichtung in eine gewünschte Zielposition. Das Luftfahrzeug kann insbesondere als unbemanntes Luftfahrzeug ausgeführt sein, welches beispielsweise in einer Höhe von bis zu 20 km über der Erdoberfläche fliegt. Das Luftfahrzeug kann ausgeführt sein, eine hohe Standzeit in der Luft von mehreren Wochen oder Monaten zu erreichen, beispielsweise indem es mit Fotovoltaikelementen ausgestattet ist, welche das Generieren von Energie, insbesondere von Antriebsenergie sowie von Energie zum Betreiben der Sendevorrichtung, ermöglichen.

Gemäß einer weiteren Ausführungsform ist die erste Empfangsvorrichtung an einem mobilen Landfahrzeug angeordnet.

Das mobile Landfahrzeug kann beispielsweise eine geländegängiges Fahrzeug sein, welches über ein System zum Auswerten und Verwerten von Bilddaten verfügt, welche basierend auf den empfangenen Radarsignalen der Empfangsvorrichtung erzeugt wurden.

Gemäß einer weiteren Ausführungsform ist die Steuervorrichtung ausgeführt, Positionsinformationen der Sendevorrichtung an die erste Empfangsvorrichtung zu übermitteln.

Dies ermöglicht es, aus der relativen Position eines detektierten Objektes mit Bezug zu der Empfangsvorrichtung die absolute Position zu ermitteln und kann insbesondere erforderlich sein, da die Empfangsvorrichtung und die Sendevorrichtung auf voneinander getrennten Plattformen, also an unterschiedlichen Positionen, angeordnet sind.

Die Sendevorrichtung kann eine Positionsermittlungseinheit aufweisen, welche beispielsweise auf Positionsdaten eines Positionsbestimmungssystems wie GPS zurückgreift und ausgeführt ist, die absolute Position der Sendevorrichtung zu ermitteln.

In einer Ausführungsform kann auch die Empfangsvorrichtung eine Positionsermittlungseinheit aufweisen, welche ausgeführt ist, die absolute Position der Empfangsvorrichtung oder eines Fahrzeugs, welche die Empfangsvorrichtung enthält, zu ermitteln.

Gemäß einer weiteren Ausführungsform weist die Sendevorrichtung eine Mehrzahl von Sendeeinheiten auf, welche voneinander beabstandet sind und jeweils ausgeführt sind, ein Radarsignal auszusenden.

Jede Sendeeinheit kann ausgeführt sein, Radarsignale auf einem eigenen Kanal zu senden. Durch diese räumlich beabstandete Anordnung der Mehrzahl von Sendeeinheiten sowie die Nutzung verschiedener Kanäle für die Radarsignale kann eine erste Apertur und durch eine Bewegung der Sendevorrichtung kann eine zweite Apertur aufgespannt werden.

Gemäß einer weiteren Ausführungsform weist die erste Empfangsvorrichtung eine Mehrzahl von Empfangseinheiten auf, welche jeweils ausgeführt sind, das Radarsignal von einer Sendeeinheit der Mehrzahl von Sendeeinheiten zu empfangen.

Die Mehrzahl von Empfangseinheiten stellt damit das Gegenstück zu der Mehrzahl von Sendeeinheiten dar. Die Sendeeinheiten können als Sendeantennen ausgeführt sein, welche auf jeweils einem Kanal Radarsignale aussenden, und welche dann von jeweils einer Empfangseinheit empfangen werden. Dieses Mehrkanalsystem kann zu einer höheren Qualität der Abbildung führen.

Gemäß einer weiteren Ausführungsform ist die erste Empfangsvorrichtung ausgeführt, die Position der Sendevorrichtung basierend auf den Radarsignalen, welche von der Mehrzahl von Empfangseinheiten empfangen wurden, zu ermitteln.

Dies kann beispielsweise durch eine Mehrkanalverarbeitungseinheit in der Empfangsvorrichtung erfolgen, wozu in einer Ausführungsform bekannte Koordinaten eines Referenzpunktes in der Umgebung der Empfangsvorrichtung sowie die absolute Position der Empfangsvorrichtung genutzt werden können.

In anderen Worten kann die Radaranordnung wie folgt beschrieben werden:

Es ist ein Aspekt, dass die Radaranordnung eine bewegliche Sendevorrichtung aufweist, deren Position sowie Bewegungsrichtung von einer Steuervorrichtung vorgebbar ist. Die Radaranordnung kann den Einsatz eines Mehrkanalradars sowohl auf der Senderseite, also bei der Sendevorrichtung, als auch auf der Empfängerseite, also bei der Empfangsvorrichtung, vorsehen. Die Sendevorrichtung kann auf einer hoch fliegenden (bis 20 km, vorzugsweise zwischen 5 km und 20 km über der Erdoberfläche), unbemannten Plattform angeordnet sein.

Die Sendevorrichtung kann in einer Ausführungsform mindestens zwei Radarsignal-Sendeeinheiten aufweisen, welche jeweils einen Sendekanal nutzen, und deren Sendeantennen mit größtmöglicher Apertur auf der fliegenden Plattform angeordnet sind und Radarsignale in Richtung der Erdoberfläche abstrahlen. Jede einzelne Sendeeinheit in Form einer Sendeantenne kann für sich als schwenkbares Mehrantennensystem ausgeführt sein, um bestimmte Gebiete intensiver mit Radarsignalen ausleuchten zu können.

Die Empfangsvorrichtung ist ein rein passives System, welches ebenfalls ein mehrkanaliges Empfangssystem sein kann und mindestens zwei oder mehr Radarsignal-Empfangskanäle aufweisen kann.

In einer Ausführungsform weist die Sendevorrichtung einen Direktkanal auf, welcher ausgeführt ist, ein Signal, insbesondere ein Radarsignal unmittelbar in Richtung der Empfangsvorrichtung zu emittieren. Die Signale des Direktkanals kommen damit direkt, also unreflektiert, bei der Empfangsvorrichtung an und können in Verbindung mit den reflektierten Radarsignalen genutzt werden, um eine Position der Sendevorrichtung zu ermitteln

Die Sendevorrichtung ist bezüglich ihrer Position und Bewegungsrichtung steuerbar, so dass die Qualität der Abbildungserzeugung in der Empfangsvorrichtung verbessert wird. Zusätzlich kann die Signalerzeugung durch die Steuervorrichtung beeinflusst werden, also der genutzte Frequenzbereich, die Bandbreite und auch die Modulation der von den Sendeeinheiten ausgestrahlten Radarsignale.

Die Sendevorrichtung der Radaranordnung kann ausgeführt sein, zwei Aperturen aufzuspannen, nämlich eine synthetische Apertur auf Grund einer Bewegung der Sendevorrichtung, d.h. auf Grund einer Flugbewegung des Luftfahrzeugs, an welchem die Sendevorrichtung angeordnet ist, und eine zweite Apertur bei Verwendung von mehr als einer Sendeeinheit, was zu einer höheren Güte der Abbildung nach der Signalverarbeitung in der Empfangsvorrichtung führen kann.

Um Abbildungen hoher Güte generieren zu können, kann es hilfreich sein, die Position der Sendevorrichtung an den Empfänger zu übertragen. Diese Position kann entweder von der Sendevorrichtung über eine Signalübertragungsstrecke unmittelbar an eine Empfangsvorrichtung übermittelt werden oder durch eine Mehrkanalsignalverarbeitung in der Empfangsvorrichtung ermittelt werden, wozu zusätzlich die bekannten Koordinaten eines beliebigen Referenzpunktes aus der Umgebung der Empfangsvorrichtung und die Position der Empfangsvorrichtung eingebracht werden können. Die Funktion des zusätzlichen Empfangskanals kann in den übrigen Empfangskanälen abgebildet werden, wobei hierfür die Sendeeinheiten als Antennensystem mit einem entsprechenden Öffnungswinkel ausgeführt ist.

Wird die Position der Sendevorrichtung übermittelt, kann hierfür ein Sendekanal genutzt werden, welcher auch für das Radarsignal genutzt wird. Die Positionsdaten können beispielsweise entweder im Radarsignal kodiert oder auch im Zeitmultiplex an die Empfangsvorrichtung übertragen werden.

In einer Ausführungsform weist die Radaranordnung mehr als eine Sendevorrichtung auf, wobei die einzelnen Sendevorrichtungen unabhängig voneinander eine Position einnehmen bzw. sich entlang einer vorgegebenen oder vorgebbaren Route bewegen können. Hierdurch können weitere Aperturen zur Erhöhung der Abbildungsgüte bei den Empfangsvorrichtungen aufgespannt werden.

### Kurze Beschreibung der Figuren

Nachfolgend wird anhand der beigefügten Zeichnungen näher auf Ausführungsbeispiele der Erfindung eingegangen. Es zeigen:
- **Fig. 1**: eine schematische Darstellung einer Radaranordnung gemäß einem Ausführungsbeispiel.
- **Fig. 2**: eine schematische Darstellung einer Radaranordnung gemäß einem weiteren Ausführungsbeispiel.

### Detaillierte Beschreibung von Ausführungsbeispielen

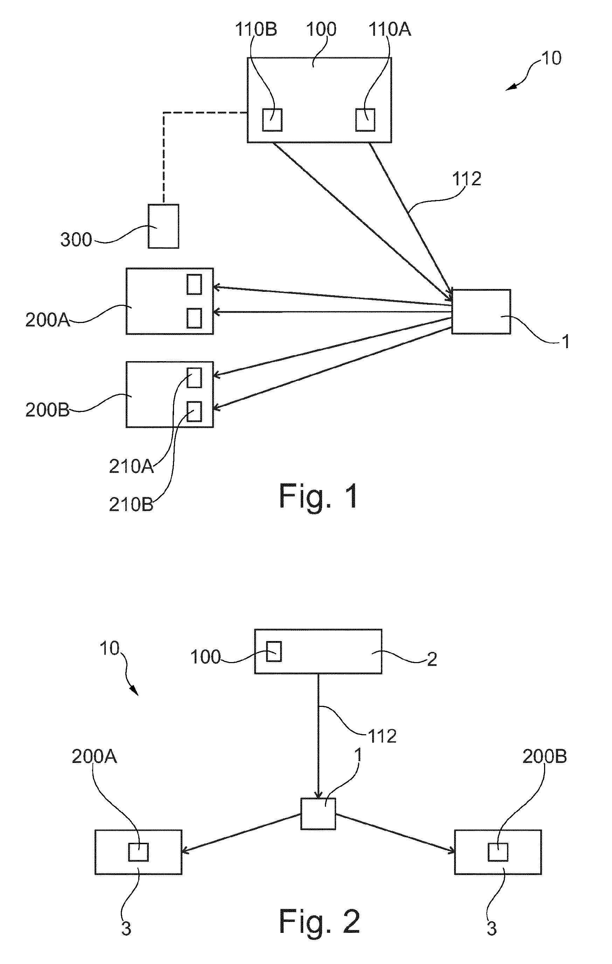

Fig. 1 zeigt eine Radaranordnung 10 mit einer Sendevorrichtung 100, zwei Empfangsvorrichtungen 200A, 200B und einer Steuervorrichtung 300. Die Radaranordnung kann auch mehr als eine Sendevorrichtung und mehr als zwei Empfangsvorrichtungen aufweisen.

Die Sendevorrichtung 100 kann an einem Luftfahrzeug 2 angeordnet sein. Die Empfangsvorrichtungen 200A, 200B können an einem Landfahrzeug 3 angeordnet sein, wie in Fig. 2 gezeigt.

Die in Fig. 1 gezeigte Sendevorrichtung 100 weist eine erste Sendeeinheit 100A und eine zweite Sendeeinheit 100B auf. Jede Empfangsvorrichtung 200A, 200B weist jeweils eine erste Empfangseinheit 210A und eine zweite Empfangseinheit 210B auf, welche ausgeführt sind, Radarsignale 112 zu empfangen, welche von der ersten Sendeeinheit 110A bzw. von der zweiten Sendeeinheit 110B ausgesandt und von einem zu detektierenden Objekt 1 reflektiert werden.

Die Steuervorrichtung 300 ist ausgeführt, eine Bewegung der Sendevorrichtung 100 bzw. des Luftfahrzeugs 2 zu steuern, so dass die Sendevorrichtung so positioniert wird, ein vorgebbares Gebiet bzw. einen vorgebbaren Bereich der Erdoberfläche mit Radarsignalen auszuleuchten. Wie weiter oben beschrieben kann die Steuervorrichtung 300 in einer zentralen Leitstelle on in einem der Fahrzeuge 3, welche als Landfahrzeuge ausgeführt sind, bei einer Empfangsvorrichtung angeordnet sein.

### Bezugszeichenliste

- 1: Objekt
- 2: Luftfahrzeug
- 3: Landfahrzeug
- 10: Radaranordnung
- 100: Sendevorrichtung
- 110: Sendeeinheit
- 112: Radarsignale
- 200: Empfangsvorrichtung
- 210: Empfangseinheit
- 300: Steuervorrichtung

## Patentansprüche

1. Radaranordnung (10), aufweisend:
eine Sendevorrichtung (100) mit einer ersten Sendeeinheit (110A), wobei die erste Sendeeinheit ausgeführt ist, Radarsignale (112) auszusenden;
eine erste Empfangsvorrichtung (200B) mit einer ersten Empfangseinheit (210A), wobei die erste Empfangseinheit ausgeführt ist, die Radarsignale der ersten Sendeeinheit, welche von einem zu detektierenden Objekt reflektiert werden, zu empfangen;
eine Steuervorrichtung (300), welche ausgeführt ist, die Sendevorrichtung (100) so anzusteuern, dass die Sendevorrichtung eine Bewegung ausführt um ihre Position anzupassen, so dass die von der ersten Sendeeinheit ausgesandten und von dem zu detektierenden Objekt reflektierten Radarsignale die erste Empfangseinheit der ersten Empfangsvorrichtung erreichen.

2. Radaranordnung (10) nach Anspruch 1,
wobei die Sendevorrichtung und die Empfangsvorrichtung räumlich voneinander getrennt sind.

3. Radaranordnung (10) nach Anspruch 1 oder 2,
aufweisend eine zweite Empfangsvorrichtung (200B) mit einer ersten Empfangseinheit;
wobei die Steuervorrichtung (300) ausgeführt ist, die Sendevorrichtung so anzusteuern, dass diese sich so bewegt dass von der ersten Sendeeinheit ausgesandten Radarsignale die zweite Empfangseinheit erreichen.

4. Radaranordnung (10) nach einem der vorhergehenden Ansprüche,
wobei die Steuervorrichtung (300) an der ersten Empfangsvorrichtung angeordnet ist.

5. Radaranordnung (10) nach einem der Ansprüche 1 bis 3,
wobei die Steuervorrichtung (300) räumlich getrennt von der ersten Empfangsvorrichtung angeordnet ist.

6. Radaranordnung (10) nach einem der vorhergehenden Ansprüche,
wobei die Sendevorrichtung (100) an einem Luftfahrzeug (2) angeordnet ist.

7. Radaranordnung (10) nach einem der vorhergehenden Ansprüche,
wobei die erste Empfangsvorrichtung an einem mobilen Landfahrzeug (3) angeordnet ist.

8. Radaranordnung (10) nach einem der vorhergehenden Ansprüche,
wobei die Steuervorrichtung (300) ausgeführt ist, Positionsinformationen der Sendevorrichtung an die erste Empfangsvorrichtung zu übermitteln.

9. Radaranordnung (10) nach einem der vorhergehenden Ansprüche,
wobei die Sendevorrichtung eine Mehrzahl von Sendeeinheiten aufweist, welche voneinander beabstandet sind und jeweils ausgeführt sind, ein Radarsignal auszusenden.

10. Radaranordnung (10) nach Anspruch 9,
wobei die erste Empfangsvorrichtung eine Mehrzahl von Empfangseinheiten aufweist, welche jeweils ausgeführt sind, das Radarsignal von einer Sendeeinheit der Mehrzahl von Sendeeinheiten zu empfangen.

11. Radaranordnung (10) nach Anspruch 10,
wobei die erste Empfangsvorrichtung ausgeführt ist, die Position der Sendevorrichtung basierend auf den Radarsignalen, welche von der Mehrzahl von Empfangseinheiten empfangen wurden, zu ermitteln.
